# EUROPEAN PATENT APPLICATION

(11) **EP 1 265 156 A2**
(43) Date of publication of application: **11.12.2002**
(21) Application number: 02012311.3
(22) Date of filing: 04.06.2002
(51) Int. Cl.: G06F 17/30

(54) **File tree conflict processor**

(30) Priority: 04.06.2001 US 295900 P
(71) Applicant: SUN MICROSYSTEMS, INC., Palo Alto, California 94303 (US)
(72) Inventor: Holtz, Brian, San Carlos, California 94070 (US); Balasubramanian, Vijay, San Jose, California 95135 (US); Dubey, Nidheesh, Fremont, California 94555 (US); Sharma, Aseem, Sunnyvale, California 94086 (US); Pandey, Vivek, Fremont, California 94555 (US)
(74) Representative: HOFFMANN - EITLE

(57) **Abstract**

The present invention provides a method for resolving conflicting changes encountered when reconciling parallel user changes to two synchronized trees of folders and files. According to one embodiment, these conflicts are presented to the user as an interface that requires an indication from the user to the winner of the conflict. According to another embodiment, since certain conflicts cannot be resolved independently, they have to be combined and presented to the user as a single conflict. According to yet another embodiment, after the user has indicated which operations are the winners of all or some of the conflicts, the winning operations are applied to the file tree with which they are in conflict.

## Description

### BACKGROUND OF THE INVENTION

### 1. FIELD OF THE INVENTION

The present invention relates to file systems, and in particular to a method for resolving a conflict between parallel user changes to two synchronized trees of folders and files.

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all rights whatsoever.

### 2. BACKGROUND ART

A way to organize files and folders of a user on a computer is by arranging them in a structure commonly known as a tree. Oftentimes, files and folders are changed. When this happens, a new tree is generated. It is helpful sometimes to find and reconcile differences between the old and new trees. Reconciling differences could lead to conflict in changes that require indication as to which conflicting takes precedence. Resolving these conflicting changes currently is very difficult, as will be further explained below. Before discussing this problem, an overview of a tree data structure is provided.

### Tree Data Structure

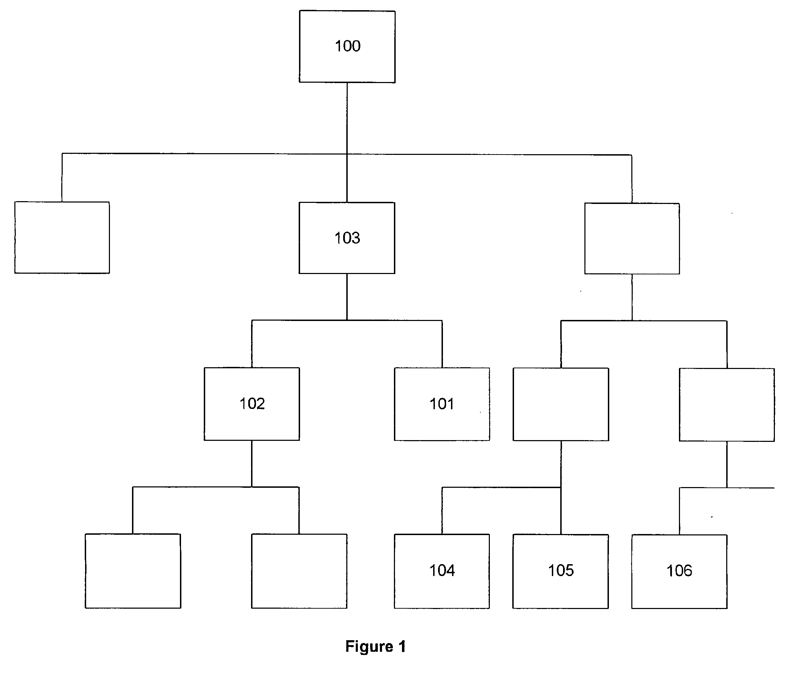

A tree data structure is illustrated in Figure 1. The apex 100 of the tree is commonly called the root. The root is usually a folder that contains all other sub-folders and files of a user. The root is the starting location of all folders and files of a computer user from where links spread out like branches of a tree to other sub-folders and files.

The nodes of the tree (i.e., the actual files) are denoted by parent, child, leaf, and non-leaf locations or nodes. A parent is any node that has a branch leading down to one or more lower nodes. In Figure 1, root 100 is one example of a parent. A child is any node that has a branch leading up to a higher node. Referring back to Figure 1, all nodes except the root is a child node. This child node category can be further segregated into left and right child depending upon the location of the child node with respect to its parent. Node 101 is a right child node, while node 102 is a left child node of parent node 103. A leaf node is any node that does not have any branches leading to lower levels in the tree. All nodes at the bottom most level of the tree (for example, 104, 105, and 106) are leaf nodes. In contrast, all other nodes are categorized as non-leaf nodes as they have a child node under them (for example, 100).

### Tree Modification

When a user makes changes to the folders and files, for instance by deleting or adding a file or changing its contents, these changes have to be correctly incorporated into the tree. Typically, a new tree is generated every time a change is made. This new tree is then compared to the old tree, and all necessary changes are reconciled to create one updated tree. Reconciling differences could lead to conflict in changes that require indication as to which conflicting change should win. This requires that the old state has to be remembered and compared with the new state in order to resolve any conflicting changes, which is wasteful of resources.

### File Tree Conflict Processor

In order to resolve any conflicting changes between an old and a new file tree, the two trees have to be compared. A utility, commonly called a file tree comparator, compares the two file tree descriptions and generates a sequenced log of changes that transforms the old tree to a new tree. A complete description of one file tree comparator is contained in co-pending U.S. patent application "File Tree Comparator", Sr. No. / , filed on , , and assigned to the assignee of this patent.

After the changes have been recorded, another utility, commonly known as a reconciler, takes in as its input the log of changes (if one is available) from both the old and the new file trees and reconciles any changes that have occurred since the last synchronization. A complete description of one file tree reconciler is contained in co-pending U.S. patent application "File Tree Reconciler", Sr. No. / , filed on , , and assigned to the assignee of this patent application.

When reconciling parallel user changes to two synchronized trees of folders and files, conflicting changes may be encountered that require indication as to which conflicting change takes precedence. These conflicting changes are handled by another utility commonly called a conflict processor. Some conflicting changes cannot be resolved independently, and those entangled conflicts have to be combined into one to be presented to the user as a single conflict. After the user indicates the winner of the conflict, the winning operations need to be applied to the file tree with which they are in conflict.

There are several commercially available conflict processors that find conflicting changes in two file tree structures. One file tree conflict processor is called Xfiles. Xfiles allows comparing, reconciling any changes, reconciling any conflicting changes, and merging two file trees over a network. In operation, Xfiles compares and merges the two file tree versions using a client/server program (graphical user interface on the client) that traverses the file trees and reports any files that are missing on the server or client machines, are different, or are conflicting with each other.

The main drawback with Xfiles is that the entire tree has to be traversed in order to find any conflicting changes to be reported to the user. Many trees are very large, in which case a substantial amount of time may be wasted traversing large portions of the tree that are not modified. Moreover, if the network connection is slow, or network traffic high, Xfiles becomes prohibitively wasteful of resources. A second drawback associated with Xfiles is that those conflicting changes have to be manually removed by the user. This compels the user to have a thorough knowledge of the entire file tree, and of all the changes made to it.

Another file tree conflict processor, termed Teamware, includes methods for finding differences in file trees, with the assumption that the file trees are of a special type - containing only SCCS folders and files - that are directly annotative. Using Teamware, developers may each be assigned a separate sub-directory of a single root directory designated as the parent workspace for a current project. The parent workspace contains the original copies of each project file and records of each set of changes to each file.

The developers obtain copies of project files for reading and editing purposes within their individual workspaces, and to record any modifications they make in the central location later on. A locking mechanism in SCCS prevents two developers from checking out the same file for editing at the same time. There are several drawbacks with Teamware, which include detecting file tree conflicting changes based on modification times rather than on change logs. Teamware is restricted further because it only works on SCCS folders and files, so, it has no application to most file tree systems.

Another file tree conflict processor is called Unison. Unison is a file synchronization tool for Unix and Windows operating systems. It allows two replicas of a collection of files, folders, or directories to be stored on different hosts or different disks on the same host, modified separately, and then brought up to date by propagating the changes in each replica to the other. Unison sends from one side (server or client) to the other the entire log, and makes the receiving side responsible for finding any conflicting changes in the files, folders, and directories of both sides. This system works well only because the utility has an indefinitely growing version log for each synced file, which is pruned only when all known synchronizers have seen the pruned versions. There is a time limit (usually a month) when the utility abandons files that have not been synced in order to prune the size of the log.

There are several drawbacks with this utility. A log for the entire file tree is sent across. If the file tree is large, the time involved in transmitting the log for the entire file tree can be time consuming, especially if the network connection is slow, or the network is highly congested. Moreover, a file not in use beyond the time limit is automatically abandoned by the log. If a user attempts to make certain changes to it, they may not be reflected in the log that is sent across to the other side. If these changes conflict, the user will be unaware of this causing synchronization problems. Furthermore, the conflict processor utility simply gives a list of all conflicts to the user, who has to manually resolve all conflicts. This compels the user to have a thorough knowledge of the entire file tree, and of all the changes made to it. This makes use of the tool difficult and unyielding.

### SUMMARY OF THE INVENTION

It is an object of the invention to provide for improved conflict resolving in file trees.

According to an embodiment, a method for processing conflicts in a first and second file tree comprises:
presenting one or more conflicts to a user; presenting more than one unresolved independent conflicts as a single conflict to said user; obtaining input from said user; and
handling said one or more conflicts and said single conflict based on said input.

One or more winning conflicts may be applied to a file tree with which they were in conflict.

The winning conflicts may be server operations and/or said winning conflicts may be client operations.

The server operations may be translated back up a conflict list across all previous server operations, and then down a conflict list across all client operations. Further, the client operations may be translated back up a conflict list across all previous client operations, and then down the conflict list across all server operations.

If said translation is a rename or a reparent of an object of said winning operation, said winning operation may be translated to refer to said object using its new lineage. Further, if said translation is a rename or a reparent of one of an ancestor of said object in the tree, said winning operation may be translated to refer to the object using its new lineage.

Moreover, said winning server operations may be en-queued for transmission to the client.

And, said winning client operations may be applied against said server's filesystem.

A program may be provided having instructions adapted to make a computer carry out the above operations. A computer readable medium may be provided including the program.

According to another embodiment, data processing means for processing conflicts in a first and second file tree may comprise: means for presenting one or more conflicts to a user; means for presenting more than one unresolved independent conflicts as a single conflict to said user; means for obtaining input from said user; and means for handling said one or more conflicts and said single conflict based on said input.

Moreover, according to another embodiment of the invention, a computer program product may comprise: a computer useable medium having computer readable program code embodied therein configured to process conflicts in a first and second file tree, said computer program product comprising: computer readable code configured therein to cause a computer to present one or more conflicts to a user; computer readable code configured therein to cause a computer to present more than one unresolved independent conflicts as a single conflict to said user; computer readable code configured therein to cause a computer to obtain input from said user; and computer readable code configured therein to cause a computer to handle said one or more conflicts and said single conflict based on said input.

Further advantageous embodiments of the invention are disclosed in further claims.

### BRIEF DESCRIPTION OF THE DRAWINGS

These and other features, aspects and advantages of the present invention will become better understood with regard to the following description, appended claims and accompanying drawings where:
- Figure 1: is an illustration of a file tree structure.
- Figure 2: is a flowchart of a system which processes file trees.
- Figure 3: is a flowchart of one embodiment of the present invention.
- Figure 4: is a flowchart of another embodiment of the present invention.
- Figure 5: is a flowchart where a conflict is removed from the conflict list once it is resolved by the conflict processor.
- Figure 6: is a flowchart of another embodiment of the present invention.
- Figure 7: is a flowchart of another embodiment of the present invention.
- Figure 8: is a flowchart of another embodiment of the present invention.
- Figure 9: is an illustration of an embodiment of a computer execution environment.

### DETAILED DESCRIPTION OF THE INVENTION

The invention relates to a file tree conflict processor. In the following description, numerous specific details are set forth to provide a more thorough description of embodiments of the invention. It will be apparent, however, to one skilled in the art, that the invention may be practiced without these specific details. In other instances, well known features have not been described in detail so as not to obscure the invention.

The present invention provides a method for resolving conflicting changes encountered when reconciling parallel user changes to two synchronized trees of folders and files. According to one embodiment each synchronized tree of folders and files may reside on a client and server respectively. According to one embodiment, these conflicts require user indication as to which conflict takes precedent. According to one embodiment, these conflicts are presented to the user as an interface.

According to another embodiment, since certain conflicts cannot be resolved independently, they are combined into one, and presented to the user as a single conflict. According to yet another embodiment, after the user has indicated which operations are the winners of all or some of the conflicts, the winning operations are applied to the file tree with which they are in conflict. This file tree can be on either the client or the server.

### File Tree Conflict Processor

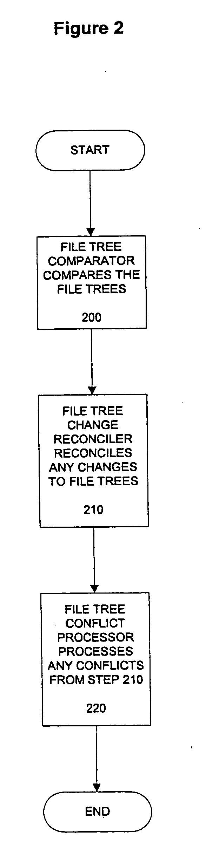

A file tree conflict processor operates at the end of a system which processes file trees. The system is shown in Figure 2. At step 200 the file tree comparator compares the file trees. At step 210, the file tree change reconciler reconciles any changes to the file trees. At step 220, the file tree conflict processor processes any conflicts that may arise during the reconciliation step above.

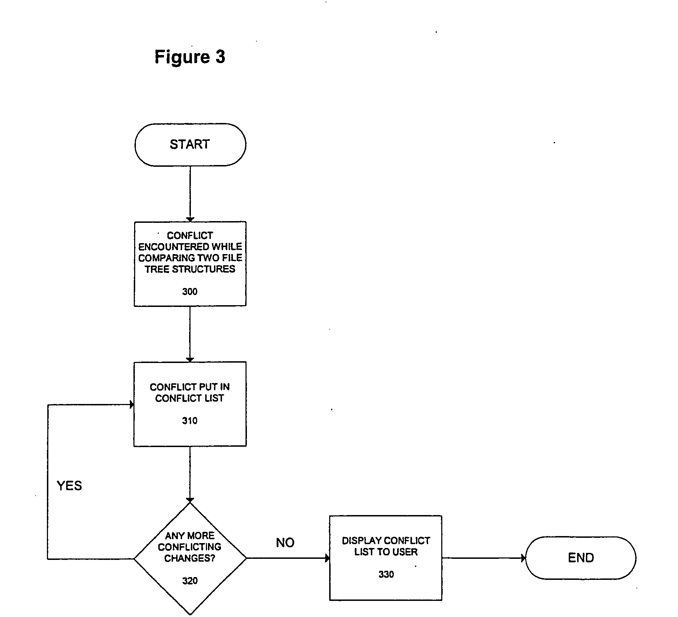

One embodiment of the present invention is shown in Figure 3. It shows in more detail the process that might occur at step 220 in Figure 2 above. At step 300, a conflict is encountered while comparing two file tree structures. At step 310, the conflict is put in a conflict list. At step 320, the processor checks for any more conflicting changes in the two file trees. If there are more conflicts found, they are put in the list (step 320), else at step 330 the conflict list is displayed to the user.

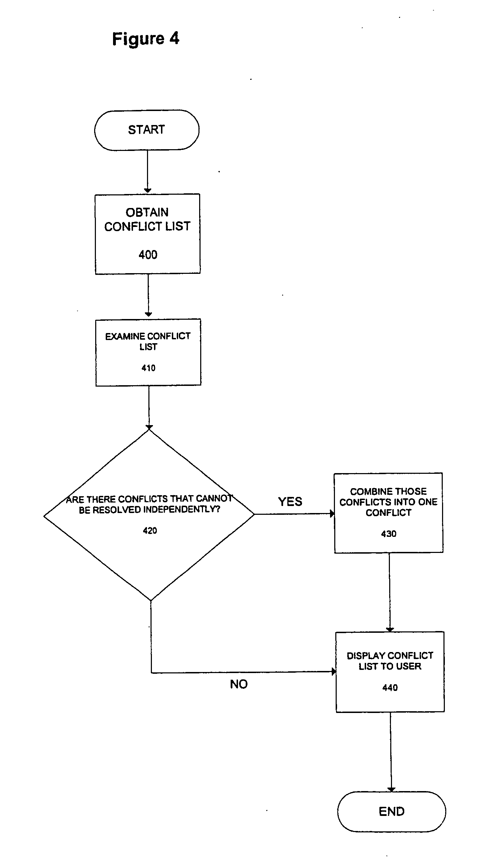

Another embodiment of the present invention is shown in Figure 4. At step 400, the conflict processor obtains a conflict list. At step 410, the conflict processor examines the conflicts in the conflict list. At step 420, the conflict processor checks the conflict list if there are more than one conflict that cannot be resolved independently, and can be combined to form a single conflict. If there are conflicts that cannot be resolved independently and can be combined to form a single conflict, the conflict processor combines those conflicts into a single conflict at step 430 before displaying the list to the user at step 440. If on the other hand, all conflicts in the conflict list can be resolved independently or there are no conflicts that can be combined to form a single conflict, the conflict processor displays the list to the user at step 440.

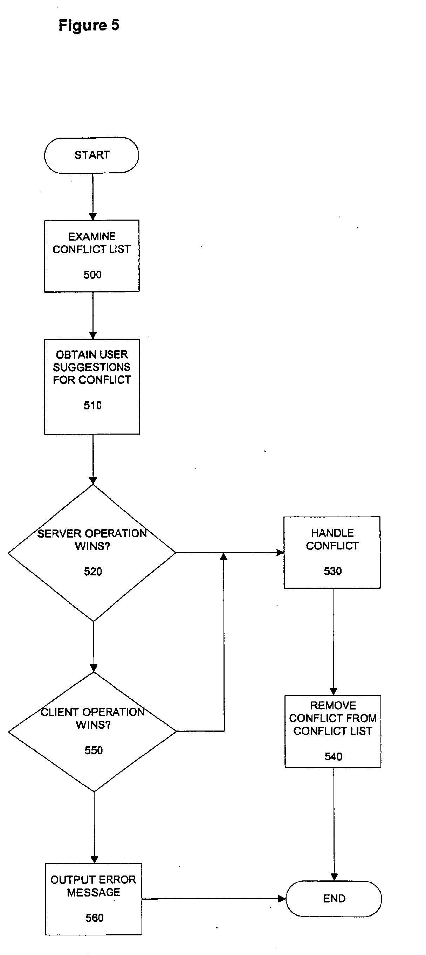

Figure 5 shows another embodiment of the present invention where a conflict is removed from the conflict list once it is resolved by the conflict processor. At step 500, the conflict list is examined by the conflict processor. At step 510, the conflict processor obtains user suggestions for the conflict in the conflict list. At step 520, the conflict processor checks to see if the winning operation is a server operation. If it is, then at step 530 the conflict is handled. At step 540, the conflict is removed from the conflict list. If at step 520, the wining operation is not a server operation, then at step 550 it checks to see if the winning operation is a client operation. If the operation is not a client operation, then at step 560, it submits an error message to the user. If on the other hand, step 550 is a client operation, then the processor handles the conflict at step 530 before removing the conflict from the conflict list at step 540.

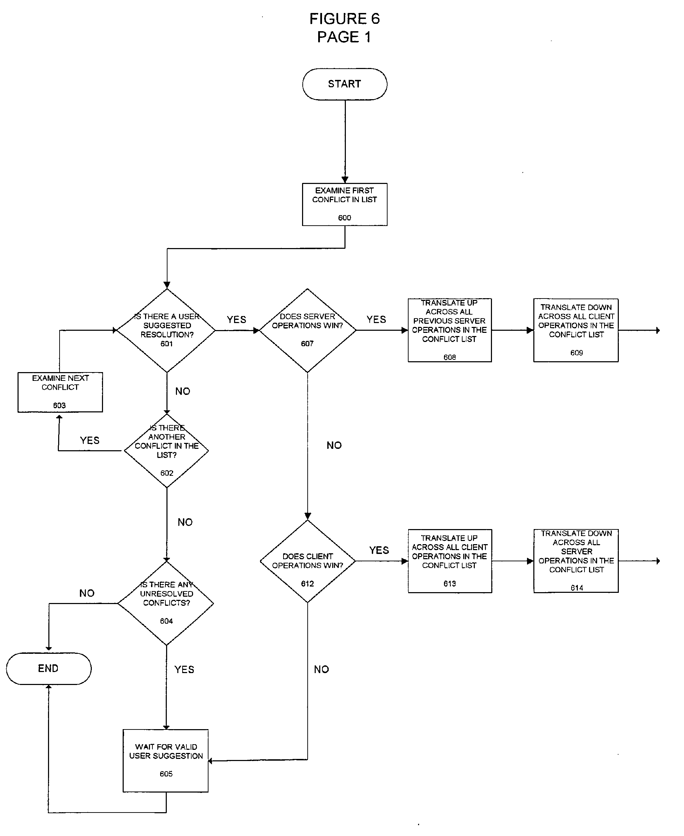

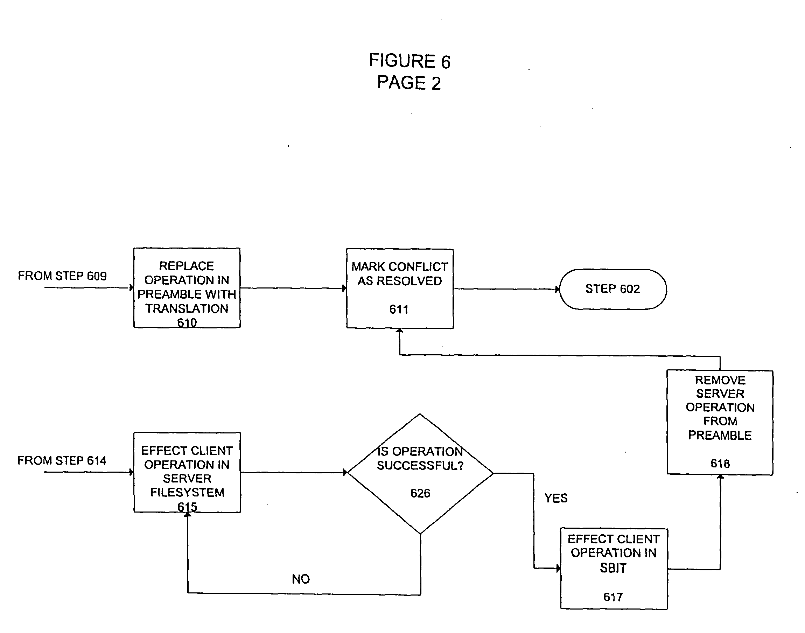

Figure 6 shows another embodiment of the present invention where the winning operations, based on the choice made by the user, are applied to the file tree which has the conflicts. At step 600, the first conflict in the conflict list is examined by the conflict processor. At step 601, the processor checks to see if the conflict has a user suggested resolution. If the conflict is not marked by a user suggestion, then at step 602 the processor checks for the next conflict in the conflict list. At step 602, if there is another conflict in the conflict list, it is examined at step 603 before going back to step 601. On the other hand, if at step 602 there is no more conflicts in the conflict list, then the processor checks at step 604 if there are any unresolved conflicts in the conflict list. If there are unresolved conflicts in the conflict list, then at step 605 the conflict processor waits for a valid user suggestion for the conflicts.

If step 601 has a user suggested resolution, the conflict processor checks at step 607 to see if the server operations should win. If the server operations are the winners of the conflict, then at step 608 the operations are translated back up the conflict list across all previous server operations. At step 609, the operations are translated down the conflict list across all client operations. At step 610, the operation is replaced in the preamble along with the translation. At step 611 the conflict is marked as resolved, and the conflict processor goes back to step 602 to check for another conflict in the conflict list.

If at step 607 the server operations do not win, then the processor checks at step 612 if the client operations should win. If the client operations are the winners of the conflict, then at step 613 the conflicts are translated back up the conflict list across all previous client operations. At step 614, the operations are translated down the conflict list across all server operations. At step 615, the client operation is effected in the server filesystem. At step 616, the conflict processor checks if the operation is successful. If it is not successful, then the conflict processor goes back to step 615. On the other hand, if the operation is a success, then at step 617 the client operation is effected in the s-bit. At step 618 the server operation is removed from the preamble, and at step 611 the conflict is marked as resolved before the conflict processor goes to fetch the next conflict at step 602. If the step 612 the client operations do not win, then the conflict processor goes to step 605 and awaits a valid user suggestion for the conflict.

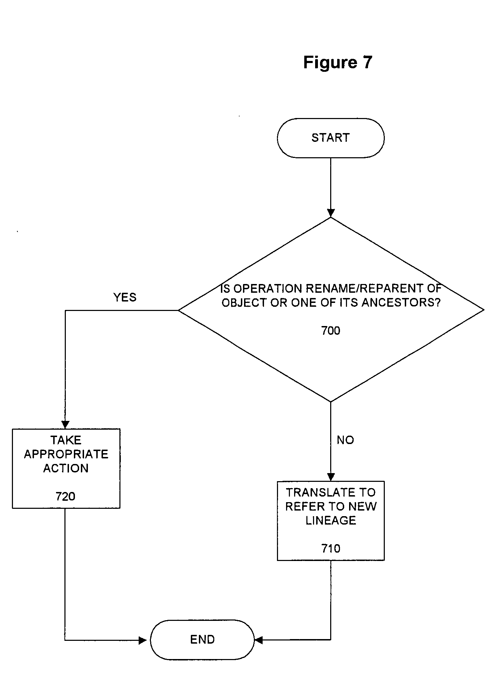

One example of translation here means that if the crossed operations are a rename or a reparent of the object of the winning operations, or of one of that object's ancestors in the tree, then the winning operations are translated to refer to the object using its new lineage. This is illustrated in Figure 7, where at step 700, the conflict processor checks to see if the crossed operations are a rename or a reparent of the object of the winning operations, or of one of that object's ancestors in the tree. If they are, then at step 710, the winning operations are translated to refer to the object using its new lineage. If at step 700, the crossed operations are not a rename or a reparent of the object of the winning operations, or of one of that object's ancestors in the tree, then it takes action appropriate to the translation at step 720.

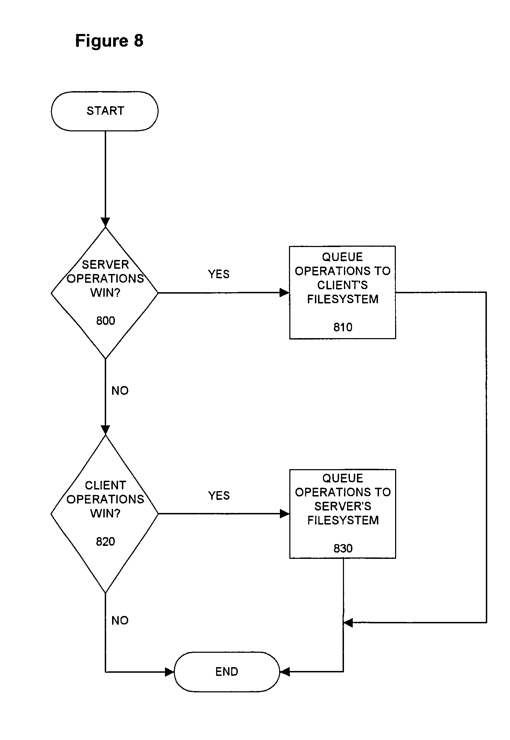

Likewise, translations of winning server operations are queued for transmission to the client's filesystem just like the translations of winning client operations are queued for transmission to the server's filesystem. This is seen in Figure 8, where at step 800, if the translations of the winning operations are server operations, then at step 810 they are queued for transmission to the client's filesystem. If at step 800, the translations of the winning operations are not server operations, then the conflict processor checks to see, at step 820, if the translations of the winning operations are client operations. If they are, then at step 830 the client operations are queued for transmission to the server's filesystem.

According to another example, data processing means may be provided for processing conflicts in a first and second file tree comprising: means for presenting one or more conflicts to a user; means for presenting more than one unresolved independent conflicts as a single conflict to said user; means for obtaining input from said user; and means for handling said one or more conflicts and said single conflict based on said input.

The data processing means may include means to apply one or more winning conflicts to a file tree with which they were in conflict.

Further, the winning conflicts may be server operations and/or the winning conflicts may be client operations.

Means may be provided to translate said server operations back up a conflict list across all previous server operations, and then down a conflict list across all client operations, and/or means may be provided to translate said client operations back up a conflict list across all previous client operations, and then down the conflict list across all server operations.

If said translation is a rename or a reparent of an object of said winning operation, said winning operation may be translated to refer to said object using its new lineage. Further, if said translation is a rename or a reparent of one of an ancestor of said object in the tree, said winning operation may be translated to refer to the object using its new lineage.

Further, means may be provided to en-queue said winning server operations for transmission to the client. And, means may be provided to apply said winning client operations against said server's filesystem.

The above elements may be realized at least partially in hardware and/or software.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

According to another embodiment, a program may be provided having instructions adapted to cause data processing means to carry out the operations of the above embodiments. Further, a computer readable medium may be provided in which the program is embodied.

### Embodiment of a Computer Execution Environment

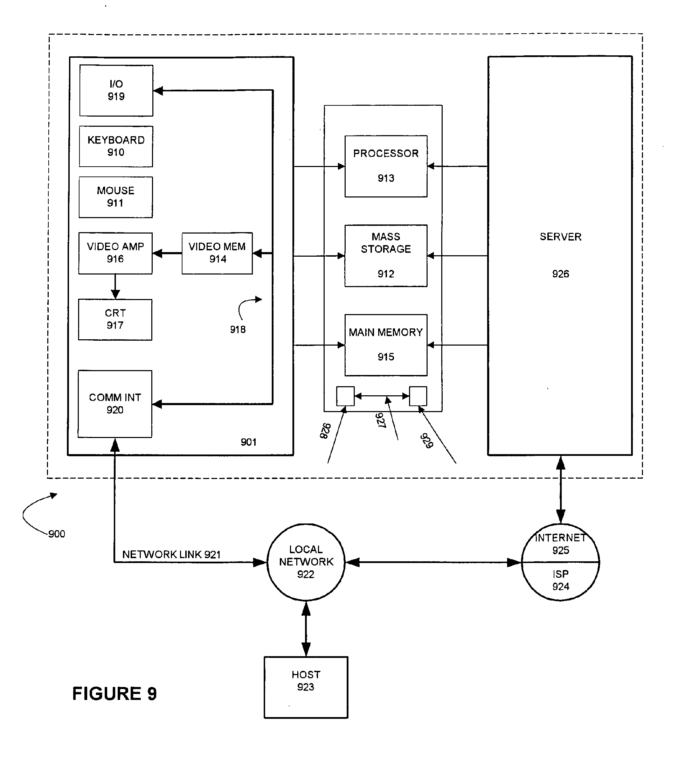

An embodiment of the invention can be implemented as computer software in the form of computer readable code executed in a desktop general purpose computing environment such as environment 900 illustrated in Figure 9, or in the form of bytecode class files running in such an environment. A keyboard 910 and mouse 911 are coupled to a bi-directional system bus 918. The keyboard and mouse are for introducing user input to a computer 901 and communicating that user input to processor 913.

Computer 901 may also include a communication interface 920 coupled to bus 918. Communication interface 920 provides a two-way data communication coupling via a network link 921 to a local network 922. For example, if communication interface 920 is an integrated services digital network (ISDN) card or a modem, communication interface 920 provides a data communication connection to the corresponding type of telephone line, which comprises part of network link 921. If communication interface 920 is a local area network (LAN) card, communication interface 920 provides a data communication connection via network link 921 to a compatible LAN. Wireless links are also possible. In any such implementation, communication interface 920 sends and receives electrical, electromagnetic or optical signals, which carry digital data streams representing various types of information.

Network link 921 typically provides data communication through one or more networks to other data devices. For example, network link 921 may provide a connection through local network 922 to local server computer 923 or to data equipment operated by ISP 924. ISP 924 in turn provides data communication services through the world wide packet data communication network now commonly referred to as the "Internet" 925. Local network 922 and Internet 925 both use electrical, electromagnetic or optical signals, which carry digital data streams. The signals through the various networks and the signals on network link 921 and through communication interface 920, which carry the digital data to and from computer 900, are exemplary forms of carrier waves transporting the information.

Processor 913 may reside wholly on client computer 901 or wholly on server 926 or processor 913 may have its computational power distributed between computer 901 and server 926. In the case where processor 913 resides wholly on server 926, the results of the computations performed by processor 913 are transmitted to computer 901 via Internet 925, Internet Service Provider (ISP) 924, local network 922 and communication interface 920. In this way, computer 901 is able to display the results of the computation to a user in the form of output. Other suitable input devices may be used in addition to, or in place of, the mouse 901 and keyboard 900. I/O (input/output) unit 909 coupled to bi-directional system bus 908 represents such I/O elements as a printer, A/V (audio/video) I/O, etc.

Computer 901 includes a video memory 914, main memory 915 and mass storage 912, all coupled to bi-directional system bus 918 along with keyboard 910, mouse 911 and processor 913.

As with processor 913, in various computing environments, main memory 915 and mass storage 912, can reside wholly on server 926 or computer 901, or they may be distributed between the two. Examples of systems where processor 913, main memory 915, and mass storage 912 are distributed between computer 901 and server 926 include the thin-client computing architecture developed by Sun Microsystems, Inc., the palm pilot computing device, Internet ready cellular phones, and other Internet computing devices.

The mass storage 912 may include both fixed and removable media, such as magnetic, optical or magnetic optical storage systems or any other available mass storage technology. Bus 918 may contain, for example, thirty-two address lines for addressing video memory 914 or main memory 915. The system bus 918 also includes, for example, a 32-bit data bus for transferring data between and among the components, such as processor 913, main memory 915, video memory 914, and mass storage 912. Alternatively, multiplex data/address lines may be used instead of separate data and address lines.

In one embodiment of the invention, the processor 913 is a microprocessor manufactured by Motorola, such as the 680X0 processor or a microprocessor manufactured by Intel, such as the 80X86, or Pentium processor, or a SPARC microprocessor from Sun Microsystems, Inc. However, any other suitable microprocessor or microcomputer may be utilized. Main memory 915 is comprised of dynamic random access memory (DRAM). Video memory 914 is a dual-ported video random access memory. One port of the video memory 914 is coupled to video amplifier 916. The video amplifier 916 is used to drive the cathode ray tube (CRT) raster monitor 917. Video amplifier 916 is well known in the art and may be implemented by any suitable apparatus. This circuitry converts pixel data stored in video memory 914 to a raster signal suitable for use by monitor 917. Monitor 917 is a type of monitor suitable for displaying graphic images.

Computer 901 can send messages and receive data, including program code, through the network(s), network link 921, and communication interface 920. In the Internet example, remote server computer 926 might transmit a requested code for an application program through Internet 925, ISP 924, local network 922 and communication interface 920. The received code may be executed by processor 913 as it is received, and/or stored in mass storage 912, or other non-volatile storage for later execution. In this manner, computer 900 may obtain application code in the form of a carrier wave. Alternatively, remote server computer 926 may execute applications using processor 913, and utilize mass storage 912, and/or video memory 915. The results of the execution at server 926 are then transmitted through Internet 925, ISP 924, local network 922, and communication interface 920. In this example, computer 901 performs only input and output functions.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the invention may be implemented in any type of computer system or programming or processing environment.

Thus, a file tree conflict processor is described in conjunction with one or more specific embodiments. The invention is defined by the following claims and their full scope of equivalents.

According to another embodiment of the invention, an article of manufacture may have the following elements.
1) An article of manufacture comprising:
   a computer usable medium having computer readable program code embodied therein for processing conflicts in a first and second file tree, said computer readable program code in said article of manufacture comprising:
      computer readable program code configured to cause said computer to present one or more conflicts to a user;
      computer readable program code configured to cause said computer to present more than one unresolved independent conflicts as a single conflict to said user;
      computer readable program code configured to cause said computer to obtain input from said user; and
      computer readable program code configured to cause said computer to handle said one or more conflicts and said single conflict based on said input.
2) The article of manufacture of 1) wherein one or more winning conflicts are applied to a file tree with which they are in conflict.
3) The article of manufacture of 2) wherein said winning conflicts are server operations.
4) The article of manufacture of 2) wherein said winning conflicts are client operations.
5) The article of manufacture of 3) wherein said server operations are translated back up a conflict list across all previous server operations, and then down a conflict list across all client operations.
6) The article of manufacture of 4) wherein said client operations are translated back up a conflict list across all previous client operations, and then down the conflict list across all server operations.
7) The article of manufacture of 5) wherein if said translation is a rename or a reparent of an object of said winning operation, said winning operation is translated to refer to said object using its new lineage.
8) The article of manufacture of 6) wherein if said translation is a rename or a reparent of one of an ancestor of said object in the tree, said winning operation is translated to refer to the object using its new lineage.
9) The article of manufacture of 3) wherein said winning server operations are en-queued for transmission to the client.
10) The article of manufacture of 4) wherein said winning client operations are applied against said server's filesystem.

## Claims

1. A method for processing conflicts in a first and second file tree comprising:
presenting one or more conflicts to a user;
presenting more than one unresolved independent conflicts as a single conflict to said user;
obtaining input from said user; and
handling said one or more conflicts and said single conflict based on said input.

2. The method of claim 1 wherein one or more winning conflicts are applied to a file tree with which they were in conflict.

3. The method of claim 2 wherein said winning conflicts are server operations.

4. The method of claim 2 wherein said winning conflicts are client operations.

5. The method of claim 3 wherein said server operations are translated back up a conflict list across all previous server operations, and then down a conflict list across all client operations.

6. The method of claim 4 wherein said client operations are translated back up a conflict list across all previous client operations, and then down the conflict list across all server operations.

7. The method of claim 5 wherein if said translation is a rename or a reparent of an object of said winning operation, said winning operation is translated to refer to said object using its new lineage.

8. The method of claim 6 wherein if said translation is a rename or a reparent of one of an ancestor of said object in the tree, said winning operation is translated to refer to the object using its new lineage.

9. The method of claim 3 wherein said winning server operations are en-queued for transmission to the client.

10. The method of claim 4 wherein said winning client operations are applied against said server's filesystem.

11. Data processing means for processing conflicts in a first and second file tree comprising:
means for presenting one or more conflicts to a user;
means for presenting more than one unresolved independent conflicts as a single conflict to said user;
means for obtaining input from said user; and
means for handling said one or more conflicts and said single conflict based on said input.

12. The data processing means of claim 11 including means to apply one or more winning conflicts to a file tree with which they were in conflict.

13. The data processing means of claim 12 wherein said winning conflicts are server operations.

14. The data processing means of claim 12 wherein said winning conflicts are client operations.

15. The data processing means of claim 13 including means to translate said server operations back up a conflict list across all previous server operations, and then down a conflict list across all client operations.

16. The data processing means of claim 14 including means to translate said client operations back up a conflict list across all previous client operations, and then down the conflict list across all server operations.

17. The data processing means of claim 15 wherein if said translation is a rename or a reparent of an object of said winning operation, said winning operation is translated to refer to said object using its new lineage.

18. The data processing means of claim 16 wherein if said translation is a rename or a reparent of one of an ancestor of said object in the tree, said winning operation is translated to refer to the object using its new lineage.

19. The data processing means of claim 13 including means ton en-queue said winning server operations for transmission to the client.

20. The data processing means of claim 14 including means to apply said winning client operations against said server's filesystem.

21. A computer program product comprising:
a computer useable medium having computer readable program code embodied therein configured to process conflicts in a first and second file tree, said computer program product comprising:
computer readable code configured therein to cause a computer to present one or more conflicts to a user;
computer readable code configured therein to cause a computer to present more than one unresolved independent conflicts as a single conflict to said user;
computer readable code configured therein to cause a computer to obtain input from said user; and
computer readable code configured therein to cause a computer to handle said one or more conflicts and said single conflict based on said input.

22. The computer program product of claim 21 wherein one or more winning conflicts are applied to a file tree with which they were in conflict.

23. The computer program product of claim 22 wherein said winning conflicts are server operations.

24. The computer program product of claim 22 wherein said winning conflicts are client operations.

25. The computer program product of claim 23 wherein said server operations are translated back up a conflict list across all previous server operations, and then down a conflict list across all client operations.

26. The computer program product of claim 24 wherein said client operations are translated back up a conflict list across all previous client operations, and then down the conflict list across all server operations.

27. The computer program product of claim 25 wherein if said translation is a rename or a reparent of an object of said winning operation, said winning operation is translated to refer to said object using its new lineage.

28. The computer program product of claim 26 wherein if said translation is a rename or a reparent of one of an ancestor of said object in the tree, said winning operation is translated to refer to the object using its new lineage.

29. The computer program product of claim 23 wherein said winning server operations are en-queued for transmission to the client.

30. The computer program product of claim 24 wherein said winning client operations are applied against said server's filesystem.

31. A program having instructions adapted to make a computer carry out the method of at least one of the claims 1 - 9.

32. A computer readable medium, in which a program is embodied, where the program is to make a computer execute the method of at least one of the claims 1 - 9.
